# EUROPÄISCHE PATENTANMELDUNG

(11) **EP 0 536 533 A2**
(43) Veröffentlichungstag der Anmeldung: **14.04.1993**
(21) Anmeldenummer: 92115040.5
(22) Anmeldetag: 03.09.1992
(51) Int. Cl.: B23Q 35/02, B23Q 1/02, B23Q 16/00, B23B 39/00

(54) **Bohrmaschine, insbesondere für die Holzbearbeitung**

(30) Priorität: 06.09.1991 DE 4129743
(71) Anmelder: REICH Spezialmaschinen GmbH, 72622 Nürtingen (DE)
(72) Erfinder: Keusch, Siegfried, W-7310 Plochingen (DE)

(57) **Zusammenfassung**

Die Erfindung betrifft einen Bohrmaschine zum Bohren von Lochreihen in plattenförmige Werkstücke, mit einem eine Werkstückauflage (11) aufweisenden Maschinengestell (10) und einem über der Werkstückauflage (11) angeordneten, verstellbaren Mehrspindel-Bohraggregat (30), bei der an der Rückseite der Werkstückauflage (11) ein feststehender längsgerichteter Werkstück-Anschlag (14) angebracht ist und die eine Anschlageinrichtung aus Anschlagschienen (24) aufweist, die parallel zu den Längsseiten der Werkstückauflage (11) ausgerichtet sind und an dieser seitlich vorstehen und bei der in die Anschlagschienen verstell- und arretierbare Anschlagaufnehmer (25) einführbar sind, wobei die Anschlagaufnehmer (25) federbelastete Anschlagplättchen (27) aufnehmen, die an der Oberfläche der Werkstückaufnahme (11) vorstehen, jedoch in eine zurückgedrängte Stellung bringbar sind. Die Handhabung der Bohrmaschine wird dadurch vereinfacht und erleichtert, daß das Mehrspindel-Bohraggregat (30) an Horizontalführungen (31) senkrecht zu den Längsseiten der Werkstückauflage (11) verstell- und arretierbar ist, daß n Anschlagleisten (24) mit Aufnahmen für Anschlagaufnehmer (25) zu einer im Querschnitt n-eckigen Anschlagwalze (20) vereinigt sind, daß die Anschlagwalze (20) unterhalb der Werkstückauflage (11) in n Winkelstellungen bringbar ist, wobei jeweils die Anschlagplättchen (27) der einem Durchbruch (13) in der Werkstückauflage (11) zugekehrten Anschlagschiene (24) durch diesen Durchbruch (13) ragen und an der Oberfläche der Werkstückauflage (11) vorstehen, und daß die Anschlagwalze (20) unabhängig von ihrer Winkelstellung in axialer Richtung eine definierte Stellung zur Werkstückauflage (11) einnimmt.

## Beschreibung

Die Erfindung betrifft eine Bohrmaschine, insbesondere für die Holzbearbeitung, zum Bohren von Lochreihen und Konstruktionsbohrungen in plattenförmige Werkstücke wie Schrankseitenwände, Schranktüren und dgl., mit einem eine Werkstückauflage aufweisenden Maschinengestell und einem über der Werkstückauflage angeordneten, verstellbaren Mehrspindel-Bohraggregat, bei der an der Rückseite der Werkstückauflage ein feststehender längsgerichteter Werkstück-Anschlag angebracht ist und die eine Anschlageinrichtung aus Anschlagschienen aufweist, die parallel zu den Längsseiten der Werkstückauflage ausgerichtet sind und an dieser seitlich vorstehen und bei der in die Anschlagschienen verstell- und arretierbare Anschlagaufnehmer einführbar sind, wobei die Anschlagaufnehmer federbelastete Anschlagplättchen aufnehmen, die an der Oberfläche der Werkstückaufnahme vorstehen, jedoch in eine zurückgedrängte Stellung bringbar sind.

Eine Bohrmaschine dieser Art ist durch die DE 33 38 943 bekannt. Bei dieser bekannten Bohrmaschine werden die Anschlagaufnehmer mit den Anschlagplättchen in den Anschlagschienen auf das gewünschte Bohrbild des Werkstückes eingestellt und arretiert. Die zwei Anschlagschienen sind fluchtend hintereinander angeordnet und werden mittels Stellspindeln gegenläufig verstellt. Die Handhabung der Bohrmaschine bei einem komplizierten und unregelmäßigen Bohrbild ist sehr schwierig, zumal sich die Bedienung abhängig vom Bohrbild auch noch ändert.

Es ist Aufgabe der Erfindung, eine Bohrmaschine der eingangs erwähnten Art zu schaffen, mit der die unterschiedlichsten mehrreihigen Bohrbilder eines Werkstückes mit einfachen Bedienungsmaßnahmen in das Werkstück eingebracht werden können.

Diese Aufgabe wird nach der Erfindung dadurch gelöst, daß das Mehrspindel-Bohraggregat an Horizontalführungen senkrecht zu den Längsseiten der Werkstückauflage verstell- und arretierbar ist, daß n Anschlagleisten mit Aufnahmen für Anschlagaufnehmer zu einer im Querschnitt n-eckigen Anschlagwalze vereinigt sind, daß die Anschlagwalze unterhalb der Werkstückauflage in n Winkelstellungen bringbar ist, wobei jeweils die Anschlagplättchen der einem Durchbruch in der Werkstückauflage zugekehrten Anschlagschiene durch diesen Durchbruch ragen und an der Oberfläche der Werkstückauflage vorstehen, und daß die Anschlagwalze unabhängig von ihrer Winkelstellung in axialer Richtung eine definierte Stellung zur Werkstückauflage einnimmt.

Die Anschlagwalze mit n-Anschlagschienen ermöglicht die Vorgabe von n Reihen von Lochrastern, wobei für die Einstellung nur die Anschlagwalze in die richtige Winkelstellung eingestellt und das Mehrspindel-Bohraggregat auf die richtige Spindel und den richtigen Abstand zum feststehenden rückseitigen Anschlag der Werkstückauflage gebracht werden müssen.

Nach einer bevorzugten Ausgestaltung ist vorgesehen, daß die Anschlagschienen im wesentlichen eine hinterschnittene Aufnahmenut aufweisen und zu einem einstückigen n-eckigen Profilabschnitt vereinigt sind, um den Teileaufwand zu reduzieren und die Arretierung der Anschlagaufnehmer zu vereinfachen, was in einfacher Weise dadurch gelöst wird, daß die Anschlagaufnehmer mittels einer Schraube und einer in der Aufnahmenut der Anschlagschiene geführten Mutter an der Anschlagwalze in beliebigen Stellungen festlegbar sind.

Ist nach einer Ausgestaltung vorgesehen, daß die Anschlagwalze in dem Maschinengestell auswechselbar gelagert ist, dann kann die auf ein ganz bestimmtes Bohrbild eines Werkstückes eingestellte Anschlagwalze ohne weitere Einstellvorgänge immer wieder für derartige Werkstücke verwendet werden. Außerdem können mehrere Anschlagwalzen verwendet werden, die auf die Bohrbilder von unterschiedlichen Werkstücken fest eingesetllt sind.

Die Einstellung der Anschlagwalze in die verschiedenen Winkelstellungen wird dadurch vereinfacht, daß der Anschlagwalze eine Dreheinrichtung zugeordnet ist, mit der die Anschlagwlaze in 360°/n-Winkelschritten verdrehbar ist.

Für die Einstellung der Anschlagaufnehmer mit den Anschlagplättchen ist eine Ausgestaltung von Vorteil, die dadurch gekennzeichnet ist, daß die der vorderen Längskante der Werkstückauflage zugekehrte Kante des Durchbruches auf der Oberseite als Maßskala ausgebildet oder mit einer Maßskala verbunden ist.

Die Handhabung der Bohrmaschine wird dadurch noch erleichtert, daß das Mehrspindel-Bohraggregat mit in eine Arbeitsstellung verdrehbaren Spindeln versehen ist, und daß die Spindeln Markierungen tragen, die mit Markierungen der Anschlagschienen übereinstimmen.

Die Werkstückauflage behindert die Verdrehung der Anschlagwalze dann nicht, wenn vorgesehen ist, daß der Durchbruch in der Werkstückauflage sich zur Unterseite der Werkstückauflage hin konisch erweitert und daß die Kanten des Durchbruches beim Drehen der Anschlagwalze entgegen der Schwenkrichtung der Anschlagplättchen die Anschlagplättchen beim Passieren des Durchbruches in die zurückgedrängte Stellung bringen.

Sollen auch in die Stirnseiten der plattenförmigen Werkstücke Bohrungen eingebracht werden, dann ist zusätzlich vorgesehen, daß an der hinteren Längskante der Werkstückauflage ein Horizontal-Bohraggregat mit einer Werkzeugaufnahme angeordnet ist, das in Richtung der Längskante so festgelegt ist, daß die Bohrachse der Werkzeugaufnahme die Bohrachse der in Arbeitsposition befindlichen Spindel des Mehrspindel-Bohraggregates schneidet.

Die Verstellung des Mehrspindel-Bohraggregates wird nach einer Ausgestaltung so ausgeführt, daß die Werkzeugaufnahme selbst vertikal begrenzt verstellbar ist. Dabei ist dann zudem vorgesehen, daß an den Horizontalführungen eine mittels Handrad verstellbare und von der Vorderseite der Werkstückauflage bedienbare Stellspindel gelagert ist, mit der das Mehrspindel-Bohraggregat wie ein Schlitten an den Horizontalführungen verstellbar ist.

Die Erfindung wird anhand eines in den Zeichnungen dargestellten Ausführungsbeispiels näher erläutert. Es zeigt:
- Fig. 1: in schematischer Seitenansicht eine Bohrmaschine mit einer Anschlagwalze nach der Erfindung,
- Fig. 2: eine schematische Ansicht auf die Rückseite der Bohrmaschine nach Fig. 1 und
- Fig. 3: in vergrößerter Darstellung die Ansicht auf die Stirnseite der bei der Bohrmaschine nach den Fig. 1 und 2 eingesetzten Anschlagwalze.

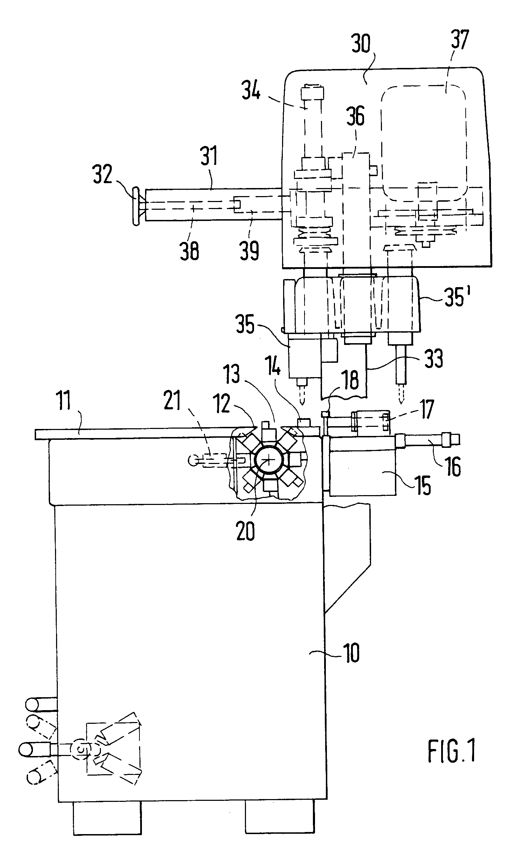

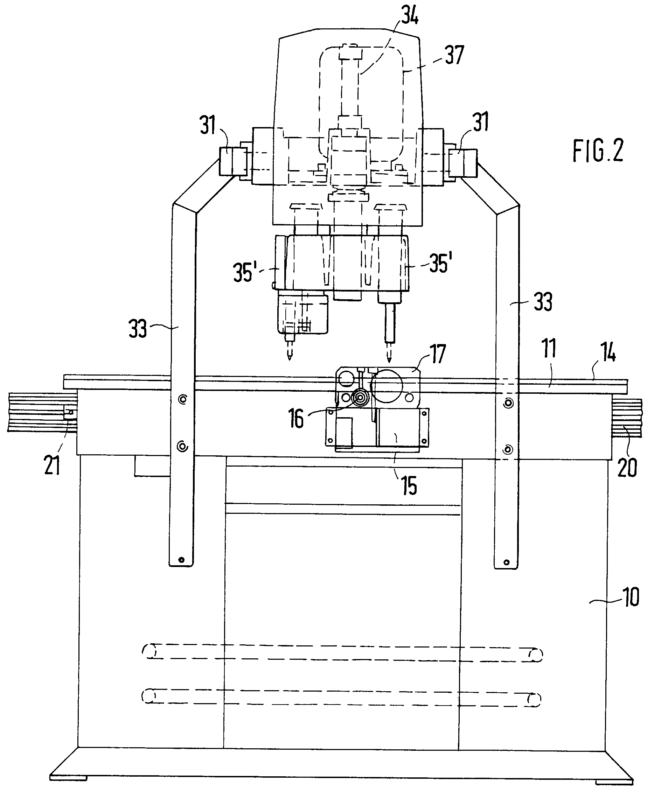

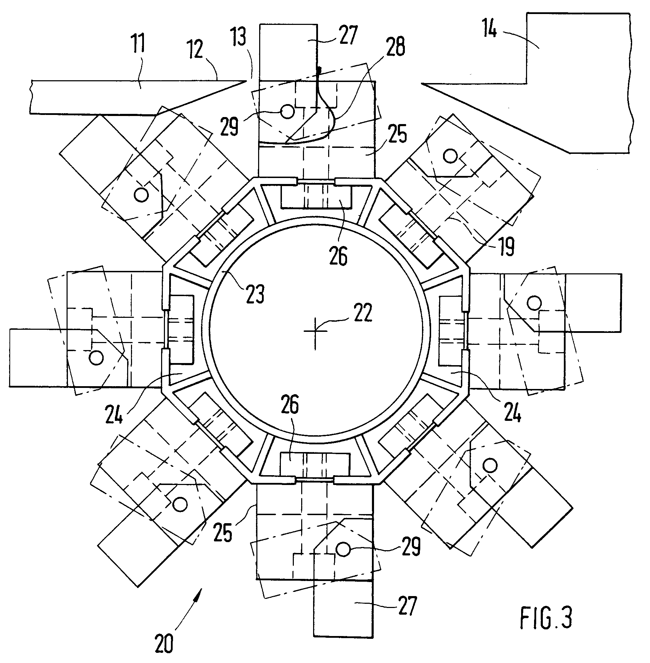

Wie die Ansichten nach Fig. 1 und 2 zeigen, hat die Bohrmaschine in bekannter Weise ein Maschinengestell 10, das nach oben mit einer Platte als Werkstückauflage 11 abgeschlossen ist. In Einzelheiten wird nur das erläutert, was zum Verständnis der vorliegenden Erfindung von Bedeutung ist. Die Werkstückauflage 11 weist einen parallel zu den Längsseiten verlaufenden schlitzförmigen Durchbruch 13 auf. Auf der Oberseite der der Vorderseite der Werkstückauflage 11 zugekehrten Kante des Durchbruches 13 ist eine Maßskala 12 eingebracht oder aufgebracht. Im Anschluß an die hintere Kante des Durchbruches 13 ist ein fester, längsgerichteter Werkstück-Anschlag 14 angebracht. Unterhalb des Durchbruches 13 ist im Maschinengestell 10 eine Anschlageinrichtung angeordnet, die vorzugsweise drehbar und abnehmbar gelagert ist. Diese Anzeigeeinrichtung ist als Anschlagwalze 20 ausgebildet, wie Fig. 3 näher zeigt und wie noch näher erläutert wird.

An der Rückseite des Maschinengstelles 10 ist ein Horizontal-Bohraggregat 15 fest angebracht. Dieses Horizontal-Bohraggregat 15 hat eine Werkzeugaufnahme 17, die mittels einer z.B. als Pneumatikzylinder ausgebildeten Stelleinrichtung 16 in Richtung zum Werkstück-Anschlag 14 verstellt werden kann, um Bohrungen in die am Werkstück-Anschlag 14 anliegende Stirnseite des Werkstückes einzubringen. Mit dem Bedienelement 18 kann die Werkzeugaufnahme 17 des Horizontal-Bohraggregates 15 begrenzt vertikal verstellt werden, um eine Veränderung der Höhenlage der Bohrungen bei unterschiedlich dicken Werkstücken zu ermöglichen.

An zwei Ständern 33 ist das Mehrspindel-Bohraggregat 30 über der Werkstückauflage 11 befestigt, wobei es an zwei Horizontalführungen 31, die senkrecht zu den Längskanten der Werkstückauflage 11 verlaufen, verstellbar geführt und arretierbar ist, um den Abstand der Bohrung von dem Werkstück-Anschlag 14 einstellen zu können. Die Verstellung des Mehrspindel-Bohraggregates 30 kann mit einem Handrad 32 von der Vorderseite der Bohrmaschine aus erfolgen. Das Handrad 32 ist mit einer Stellspindel 38 verbunden, die in einer Gewindeaufnahme 39 des Mehrspindel-Bohraggregates 30 verstellbar ist und darüber das Mehrspindel-Bohraggregat 30 wie einen Schlitten auf den Horizontalführungen 31 verstellt. Das Mehrspindel-Bohraggregat 30 weist mehrere, drehbar gelagerte Spindeln 35 und 35' auf, wobei die in Arbeitsstellung gebrachte Spindel 35 in der in Fig. 1 gezeigten Ausgangsstellung mit der Achse auf den festen Werkstück-Anschlag 14 ausgerichtet oder ausrichtbar ist. In der Ansicht nach Fig. 2 ist die in Arbeitsstellung befindliche Spindel 35 nicht dargestellt, die auf die Mittelachse der Stelleinrichtung 34 ausgerichtet ist, welche die Spindel 35 vertikal verstellt. Zum Antrieb der Spindel 35 ist ein Antriebsmotor 37 vorgesehen, der mit einer Antriebskopplung 36 bekannter Art die Spindel 35 in Drehbewegungen versetzt. Der Aufbau und die Steuerung der Spindeln und des Mehrspindel-Bohraggregates 30 ist für die Erfindung nicht von Bedeutung und kann in verschiedener Art ausgeführt sein.

Das wesentliche Element der Erfindung ist die Anschlagwalze 20 nach Fig. 3, die in das Maschinengestell 10 unterhalb des Durchbruches 13 so eingebracht wird, daß je nach Winkelstellung der Anschlagwalze 20 Anschlagplättchen 27 einer Anschlagschiene 24 der Anschlagwalze 20 durch den Durchbruch 13 ragen und an der Oberseite der Werkstückauflage 11 vorstehen.

Wie Fig. 3 zeigt, sind beim Ausführungsbeispiel acht Anschlagschienen 24, die eine hinterschnittene, durchgehende Aufnahmenut bilden, zu einem einstückigen, achteckigen Profilabschnitt 23 zusammengefaßt. Die Länge des Profilabschnittes 23 ist auf die Abmessungen der zu bearbeitenden Werkstücke abgestimmt und kann die Längsabmessung der Werkstückauflage 11 übersteigen. Die Anordnung der Anschlagwalze 20 ist dann so, daß sie zu gleichen Teilen an den Seiten der Werkstückauflage 11 vorsteht.

Die Lagerung der Anschlagwalze 20 im Maschinengestell 10 ist stets so, daß sie eine definierte axiale Stellung zur Werkstückauflage 11 einnimmt. Die Anschlagwalze 20 kann in acht Winkelstellungen zur Werkstückauflage 11 gebracht werden, so daß also jede Anschlagschiene 24 dem Durchbruch 13 zugekehrt eingestellt werden kann. Dabei kann die Anschlagwalze 20 auch drehbar gelagert sein und mit einer Dreheinrichtung 21 in Schritten von 360°/8=45° verdreht werden, so daß die Anschlagschienen 24 nacheinander dem Durchbruch 13 zugekehrt werden.

Vorteilhaft ist eine Lagerung, die das Herausnehmen der Anschlagwalze 20 erlaubt. Für bestimmte Werkstücke sind dann fest eingestellte Anschlagwalzen 20 vorgesehen, die wahlweise verwendbar sind.

In den Aufnahmenuten der Aufnahmeschienen 24 sind entsprechend dem Bohrbild einer Reihe Anschlagaufnehmer 25 befestigt, die mit ihren Abständen die Lage der Bohrungen in einer Reihe des Bohrbildes festlegen. Die Anschlagaufnehmer 25 sind mittels Schraube 19 und Mutter 26 an beliebigen Stellen der Anschlagschienen 24 festzulegen. Die Anschlagaufnehmer 25 haben ein schwenkbar gelagertes Anschlagplättchen 27, wie die Schwenkachse 29 zeigt, und lassen sich nur in einer Richtung entgegen der Wirkung einer Feder 28 verschwenken. Die Anschlagplättchen 27 bilden im Durchbruch 13 eine Reihe von Anschlägen, an die das Werkstück mit der zugekehrten Stirnseite herangeführt werden kann. Dabei werden die nicht verwendeten Anschlagplättchen 27 durch das Werkstück im Uhrzeigersinn nach Fig. 3 verschwenkt, so daß sie in den Durchbruch 13 eingeschwenkt sind. Lediglich das verwendete Anschlagplättchen 27 bestimmt den Abstand der Bohrung von der anliegenden Stirnseite des Werkstückes, da ja die Spindel 35 des Mehrspindel-Bohraggregates 30 in Axialrichtung der Anschlagschienen 24 stets eine definierte Stellung einnimmt und senkrecht dazu auf den Abstand der Reihe von Bohrungen zu der an dem festen Werkstück-Anschlag 14 anliegenden Stirnseite des Werkstückes eingestellt ist. Beginnt man an einem Ende der Anschlagschiene 24 mit dem Anlegen des Werkstückes an das letzte Anschlagplättchen 27 und verwendet man nacheinander die folgenden Anschlagplättchen derselben Anschlagschiene 24, dann kann man mit dem in der Spindel 35 gehaltenen Werkzeug die Reihe von Bohrungen gemäß dem gewünschten und durch die Positionen der Anschlagplättchen 27 in der Anschlagschiene 24 vorgegebenem Bohrbild einbringen.

Für die nächste Reihe von Bohrungen im Bohrbild wird eine andere Anschlagschiene 24 mit entsprechend eingestellten Anschlagplättchen 27 verwendet und das Mehrspindel-Bohraggregat 30 auf den entsprechenden Abstand der Reihe von Bohrungen zu der an dem festen Werkstück-Anschlag 14 anliegenden Stirnseite des Werkstückes eingestellt. Der Vorgang der nacheinander erfolgenden Verwendung der Anschlagplättchen 27 zur Bestimmung der Lage der Bohrungen ist wieder entsprechend. Mit der Anschlagwalze 20 nach Fig. 3 lassen sich acht Reihen von Bohrungen vorgeben, wobei den Reihen auch unterschiedliche Spindeln zugeordnet werden können. Dann empfiehlt sich, an den Anschlagschienen 24 und den den Spindeln 35 und 35' gleiche Markierungen anzubringen, die dann die Zuordnung bei der Handhabung der Bohrmaschine erleichtern. Einer Reihe von Bohrungen können auch mehrere Anschlagschienen 24 zugeordnet werden, um mit mehreren Spindeln 35 und 35' zusammenarbeiten zu können. So kann z.B. eine Reihe zwei unterschiedliche Bohrungen aufweisen und eine Anschlagschiene 24 gibt mit den Anschlagplättchen 27 die Positionen für die ersten Bohrungen mit einer ersten Spindel 35 vor, während die zweite Anschlagschiene 24 mit ihren Anschlagplättchen 27 die Positionen für die zweiten, andersartigen Bohrungen vorgibt, die dann mit einer zweiten Spindel 35' und dem darin festgelegten anderen Werkzeug eingebracht werden.

Ist die Anschlagwalze 20 im Maschinengestell 10 drehbar gelagert, dann ist die Drehrichtung der Anschlagwalze 20 der Schwenkrichtung der Anschlagplättchen 27 entgegengesetzt, so daß die Anschlagplättchen 27 beim drehen der Anschlagwalze 20 durch die Kanten des Durchbruches 13 in die zurückgedrängte Stellung gebracht werden können, um den Durchbruch 13 in der Werkstückauflage 11 zu passieren, wie der Fig. 3 zu entnehmen ist.

Die Anzahl der Anschlagschienen 24 der Anschlagwalze 20 kann auch kleiner oder größer sein. Wichtig ist nur, daß der Profilabschnitt 23 stete als regelmäßiges n-Eck ausgelegt wird und die Dreheinrichtung 21 die entsprechenden Winkelschritte ausführt.

Die Einstellung der Anschlagaufnehmer 25 mit den Anschlagplättchen 27 kann auch in der eingesetzten Stellung der Anschlagwalze 20 vorgenommen werden. Dazu ist die Maßskala 12 vorgesehen, die in die Oberseite der Werkstückauflage 11 eingearbeitet oder darauf befestigt ist. Der Durchbruch 13 in der Werkstückauflage 11 hat eine Breite, die größer ist als die Länge der Anschlagplättchen 27, damit die nicht verwendeten und vom Werkstück abgedeckten Anschlagplättchen 27 in den Durchbruch 13 eingeschwenkt werden können.

## Patentansprüche

1. Bohrmaschine, insbesondere für die Holzbearbeitung, zum Bohren von Lochreihen und Konstruktionsbohrungen in plattenförmige Werkstücke , wie Schrankseitenwände, Schranktüren und dgl., mit einem eine Werkstückauflage aufweisenden Maschinengestell und einem über der Werkstückauflage angeordneten, verstellbaren Mehrspindel-Bohraggregat, bei der an der Rückseite der Werkstückauflage ein feststehender längsgerichteter Werkstück-Anschlag angebracht ist und die eine Anschlageinrichtung aus Anschlagschienen aufweist, die parallel zu den Längsseiten der Werkstückauflage ausgerichtet sind und an dieser seitlich vorstehen und bei der in die Anschlagschienen verstell- und arretierbare Anschlagaufnehmer einführbar sind, wobei die Anschlagaufnehmer federbelastete Anschlagplättchen aufnehmen, die an der Oberfläche der Werkstückaufnahme vorstehen, jedoch in eine zurückgedrängte Stellung bringbar sind,
dadurch gekennzeichnet,
daß das Mehrspindel-Bohraggregat (30) an Horizontalführungen (31) senkrecht zu den Längsseiten der Werkstückauflage (11) verstell- und arretierbar ist,
daß n Anschlagleisten (24) mit Aufnahmen für Anschlagaufnehmer (25) zu einer im Querschnitt n-eckigen Anschlagwalze (20) vereinigt sind,
daß die Anschlagwalze (30) unterhalb der Werkstückauflage (11) in n Winkelstellungen bringbar ist, wobei jeweils die Anschlagplättchen (27) der einem Durchbruch (13) in der Werkstückauflage (11) zugekehrten Anschlagschiene (24) durch diesen Durchbruch (13) ragen und an der Oberfläche der Werkstückauflage (11) vorstehen, und
daß die Anschlagwalze (20) unabhängig von ihrer Winkelstellung in axialer Richtung eine definierte Stellung zur Werkstückauflage (11) einnimmt.

2. Bohrmaschine nach Anspruch 1,
dadurch gekennzeichnet,
daß die Anschlagschienen (24) im wesentlichen eine hinterschnittene Aufnahmenut aufweisen und zu einem einstückigen n-eckigen Profilabschnitt vereinigt sind.

3. Bohrmaschine nach Anspruch 1 oder 2,
dadurch gekennzeichnet,
daß die Anschlagaufnehmer (25) mittels einer Schraube (19) und einer in der Aufnahmenut der Anschlagschiene (24) geführten Mutter (26) an der Anschlagwalze (20) in beliebigen Stellungen festlegbar sind.

4. Bohrmaschine nach einem der Ansprüche 1 bis 3,
dadurch gekennzeichnet,
daß die Anschlagwalze (20) in dem Maschinengestell (10) auswechselbar gelagert ist.

5. Bohrmaschine nach einem der Ansprüche 1 bis 4,
dadurch gekennzeichnet,
daß der Anschlagwalze (20) eine Dreheinrichtung (21) zugeordnet ist, mit der die Anschlagwalze (20) in 360°/n-Winkelschritten verdrehbar ist.

6. Bohrmaschine nach einem der Ansprüche 1 bis 5,
dadurch gekennzeichnet,
daß die der vorderen Längskante der Werkstückauflage (11) zugekehrte Kante des Durchbruches (13) auf der Oberseite als Maßskala ausgebildet oder mit einer Maßskala (12) verbunden ist.

7. Bohrmaschine nach einem der Ansprüche 1 bis 6,
dadurch gekennzeichnet,
daß das Mehrspindel-Bohraggregat (30) mit in eine Arbeitsstellung verdrehbaren Spindeln (35,35') versehen ist, und
daß die Spindeln (35,35') Markierungen tragen, die mit Markierungen der Anschlagschienen (24) übereinstimmen.

8. Bohrmaschine nach einem der Ansprüche 1 bis 7,
dadurch gekennzeichnet,
daß der Durchbruch (11) in der Werkstückauflage (11) sich zur Unterseite der Werkstückauflage (11) hin konisch erweitert und
daß die Kanten des Durchbruches (13) beim Drehen der Anschlagwalze (20) entgegen der Schwenkrichtung der Anschlagplättchen (27) die Anschlagplättchen (27) beim Passieren des Durchbruches (13) in die zurückgedrängte Stellung bringen.

9. Bohrmaschine nach einem der Ansprüche 1 bis 8,
dadurch gekennzeichnet,
daß an der hinteren Längskante der Werkstückauflage (11) ein Horizontal-Bohraggregat (15) mit einer Werkzeugaufnahme (17) angeordnet ist, das in Richtung der Längskante so festgelegt ist, daß die Bohrachse der Werkzeugaufnahme (17) die Bohrachse der in Arbeitsposition befindlichen Spindel (35) des Mehrspindel-Bohraggregates (30) schneidet.

10. Bohrmaschine nach Anspruch 9,
dadurch gekennzeichnet,
daß die Werkzeugaufnahme (17) selbst vertikal begrenzt verstellbar ist.

11. Bohrmaschine nach einem der Ansprüche 1 bis 10,
dadurch gekennzeichnet,
daß an den Horizontalführungen (31) eine mittels Handrad (32) verstellbare und von der Vorderseite der Werkstückauflage (11) bedienbare Stellspindel (38) gelagert ist, mit der das Mehrspindel-Bohraggregat (30) wie ein Schlitten an den Horizontalführungen (31) verstellbar ist.

12. Bohrmaschine nach einem der Ansprüche 1 bis 11,
dadurch gekennzeichnet,
daß die in Arbeitsstellung befindliche Spindel (35) des Mehrspindel-Bohraggregates (30) mittels einer Vertikalstelleinrichtung (34) verstellbar und mittels eines Antriebsmotors (37) und einer Antriebskopplung (36) antreibbar ist.

13. Bohrmaschine nach einem der Ansprüche 1 bis 12,
dadurch gekennzeichnet,
daß mehrere Anschlagwalzen (20) vorgesehen sind, die auf unterschiedliche Bohrbilder verschiedener Werkstücke fest eingestellt sind.
